# EUROPEAN PATENT APPLICATION

(11) **EP 0 540 058 A2**
(43) Date of publication of application: **05.05.1993**
(21) Application number: 92118771.2
(22) Date of filing: 02.11.1992
(51) Int. Cl.: G11B 5/66

(54) **Perpendicular magnetic recording medium**

(30) Priority: 31.10.1991 JP 285962/91
(71) Applicant: TOKIN CORPORATION, Sendai-shi Miyagi-ken 982 (JP); CANON KABUSHIKI KAISHA, Tokyo 146 (JP)
(72) Inventor: Osawa, Ryuji, c/o Tokin Corporation, Taihaku-ku, Sendai-shi, Miyagi-ken (JP)
(74) Representative: Prüfer, Lutz H., Dipl.-Phys.

(57) **Abstract**

In a perpendicular magnetic recording medium comprising a non-magnetic carrier substrate, a first magnetic film layer formed on the carrier substrate, and a second magnetic film layer of a cobalt alloy formed on the first magnetic film for perpendicular magnetic recording, the first magnetic film layer is made of a magnetic compound consisting essentially, by weight, of 0-25 wt% Cr, 5-70 wt% Ni and substatially the balance of Co. The first magnetic film layer has a thickness of 100-1,000 Å. The second magnetic film is made of a composition consisting of cobalt and at least one selected from a group of Cr, Ti, Ta, Pt, and O. The perpendicular magnetic recording medium further comprises a protective film formed on the second magnetic film layer. The protectiv film consists essentially of silicon oxide and having a sheet resistace of 1 x 10¹³ ohms/square. The perpendicular magnetic recording medium is provided with micro projections formed thereon with a density of 10⁴ projections/mm² and with an arithmetical mean deviation of profile of 10-30 Å.

## Description

### Background of the Invention:

The present invention relates to a magnetic recording medium such as a magnetic disk and a magnetic tape, and in particular, to a perpendicular magnetic recording medium for enabling high density magnetic recording.

The magnetic recording medium generally comprises a non-magnetic carrier substrate, and a magnetic recording layer deposited onto a surface of the carrier substrate. Information recording and reproducing is performed for the magnetic recording layer along a track by a magnetic head.

The magnetic recording medium is often formed as a magnetic disk which is used as an external data storage device for a personal computer or a word processor or as a recording medium in other disk players. In the magnetic disk, the magnetic recording medium is circular and the track is formed in concentric circles with a track pitch determined by a relative radial movement of the magnetic head. The magnetic disk is contained in a soft or a hard non-magnetic case.

Another type of the magnetic recording medium is a magnetic tape which is used as a recording medium in typically a video tape recorder or other tape recorders. The magnetic recording medium is formed in a long tape form and is wound on a tape reel. One or more tracks are determined along the longitudinal direction of the tape.

In order to increase the recording capacity of the magnetic recording medium, it is necessary to increase a track density per one magnetic recording medium by reduction of a width of the track. However, the reduction of the track width results in degradation of a reproducing property such as a reduced reproducing output power.

Another approach is high density recording per one track. The perpendicular magnetic recording is proposed and known in the prior art as one medium for the high density recording. In the perpendicular magnetic recording, information is recorded in the magnetic recording layer by magnetization perpendicular to the magnetic recording layer. Accordingly, the perpendicular magnetic recording medium does not suffer from the diamagnetic field. Therefore, the perpendicular magnetic recording enables the high density recording in comparison with a conventional magnetic recording wherein information is recorded in the magnetic recording layer by magnetization parallel with the magnetic recording film.

As the perpendicular magnetic recording medium, it is known in the art that barrium ferrite powder is deposited or coated together with binder agent to form the vertical magnetic recording layer onto the carrier substrate. For further improvement of the recording density, another perpendicular magnetic recording medium is proposed in the prior art where a mgnetic film layer of, for example, Co-Cr alloy, is used as the perpendicular magnetic recording layer without presence of any non-magnetic material such as the binder agent As the magnetic film layer, another cobalt containing composition is also used which consists essentially of cobalt and at least one addition selected from Ti, Ta, Pt, and O. The cobalt containing magnetic composition can include at lest one of B and C as additives. The magnetic film layer of the cobalt containing magnetic composition will be referred to as a Co containing magnetic film layer. The Co containing magnetic film layer is generally formed with a thickness of 0.01-0.8 µm by, for example, the sputtering technique, and is generally protected by a protective film formed thereon.

In order to improve an output power reproduced from the perpendicular magnetic recording medium by a magnetic head, it has been proposed to provide another magnetic film layer, as a magnetic underlayer, under the Co containing magnetic film layer and on the carrier substrate. Thus, the perpendicular magnetic recording medium has double magnetic film layers. The magnetic underlayer is made of a semi-hard magnetic material Of Fe-Co alloy and generally has a thickness of 10-100 nm. The magnetic underlayer of Fe-Co alloy serves as a magnetic loop under the Co containing magnetic film layer to from a closed magnetic loop with a reduced magnetic resistance together with the magnetic head and the Co containing magnetic film layer, so that the output power reproduced by the magnetic head is increased.

The Fe-Co magnetic underlayer is generally also formed on the carrier substrate by the sputtering technique. Due to any external magnetic field existing and/or tension applied to the carrier substrate during the formation of the magnetic underlayer by the sputtering technique, the Fe-Co base magnetic underlayer is formed with a magnetic anisotropy.

When the track of the magnetic recording medium is in parallel with a magnetic easy axis of the anisotropic Fe-Co magnetic underlayer, the closed magnetic loop has a minimum magnetic resistance. However, when the track of the magnetic recording medium shifts in the direction from the magnetic easy axis, the closed magnetic loop has an increased resistance to decrease the output power reproduced from the perpendicular magnetic recording medium. As a result, it is difficult to produce the perpendicular magnetic recording medium which can stably provide a high reproducing output power.

### Summary of the Invention:

It is an object of the present invention to provide a perpendicular magnetic recording medium which can stably provide a high reproducing output power without relation to the track direction.

According to the present invention, a perpendicular magnetic recording medium is obtained which comprises a non-magnetic carrier substrate, a first magnetic film layer formed on the carrier substrate, the first magnetic film layer being a magnetic compound consisting essentially, by weight, of 0-25 wt% Cr, 5-70 wt% Ni and substantially the balance of Co, and a second magnetic film layer of a cobalt containing magnetic composition formed on the first magnetic film layer for perpendicular magnetic recording.

A preferable Ni content in the magnetaic compound of the first magnetic film layer is 35-60 wt%.

The first magnetic film layer preferably has a thickness of 100-1,000 Å.

The second magnetic film layer may be made of a magnetic composition consisting essentially or cobalt and at least one selected from a group of Cr, Ti, Ta, Pt, and O.

The perpendicular magnetic recording medium may further comprise a protective film formed on the second magnetic film layer, the protective film consisting essentially of silicon oxide and having a sheet resistace of 1 x 10¹³ ohms/square or more, preferably, 1 x 10¹⁴ to 1 x 10¹⁷ ohms/square.

The perpendicular magnetic recording medium may be provided with micro projections formed on its surface with a density of 10⁴ projections/mm² or more and with an arithmetical mean deviation of the profile Ra of 10-30 Å.

### Brief description of the Drawings:

Fig. 1 is a sectional view of a perpendicular magnetic recording medium having double magnetic film layers,
Fig. 2 is a schematic side view illustrating an apparatus for forming the double magnetic film layers on a non-magnetic carrier web;
Fig. 3 is a plan view illustrating a blank of magnetic recording medium produced by the apparatus of Fig. 2;
Fig. 4 is a view illustrating an output power reproduced from a conventional perpendicular magnetic recording medium having a Co-Fe alloy magnetic underlayer to an angle between the track direction of the conventional perpendicular magnetic medium and a magnetic easy axis of the magnetic underlayer;
Fig. 5 is a view illustrating several magnetic compounds of the magnetic underlayer according to the present invention and the coercive forces of the magnetic compounds when a temperature condition is 200^{o}C for production of the magnetic underlayer by the sputtering; Fig. 6 is a view similar to Fig. 5 but the temperature condition is different and 25 ^{o}c; and
Fig. 7 is a view illustrating an output power reproduced from a perpendicular magnetic recording medium having a Co-Cr-Ni alloy magnetic underlayer according to an example of the present invention and a coercive force of the Co-Cr-Ni alloy magnetic underlayer to variation of an angle of the track direction of the perpendicular magnetic recording medium from a fixed direction.

### Description of Preferred Embodiments:

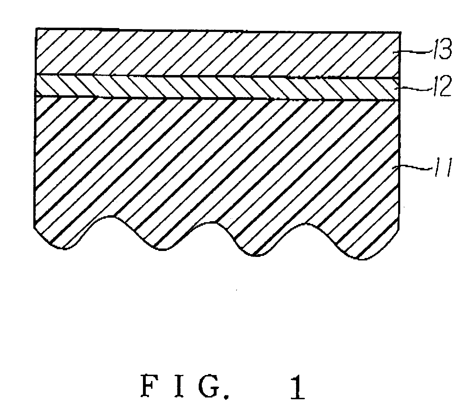

Referring to Fig. 1, a perpendicular magnetic recording medium of the present invention comprises a non-magnetic carrier substrate 11 made of, for example, a plastic film, a first magnetic film layer or a magnetic underlayer 12 formed on a surface of the carrier substrate 11 and a second magnetic film layer 13 formed on a surface of the first magnetic film layer 12. A protective film of a non-magnetic material (not shown) is usually formed on the second magnetic film layer 13.

The perpendicular magnetic recording medium of the Present invention is usually produced by use of the sputtering technique.

Turning to Fig. 2, a non-magnetic web 21 is fed out from an unwinding roll 22 to a can 23 through a guide roll 24. Then, the first magnetic film layer 12 is formed on the web 21 by use of a sputter target 25 for the first magnetic film layer and then the second magnetic film layer 13 is formed on the first magnetic film layer by use of another sputter target 26 for the second magnetic film layer. Thereafter, the web 21 is wound up to a winding roll 27 through a guide roll 28. Plates 29 ad 30 are for controlling regions where the first and the second magnetic film layers are formed. Thus, a magnetic web 31 is produced which comprises the first magnetic film layer and the second magnetic film layer formed an the non-magnetic web 21.

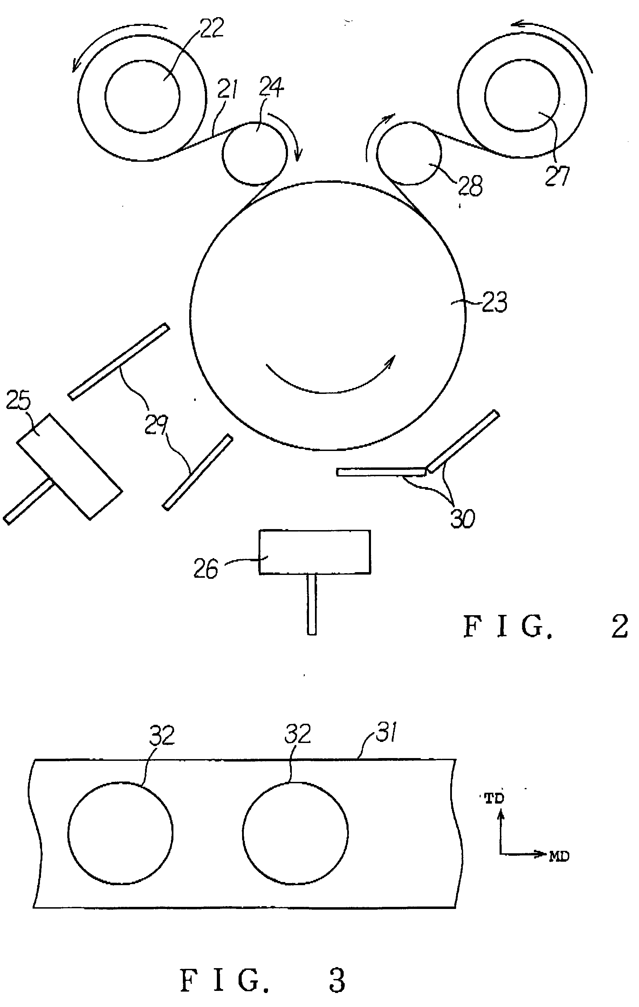

Referring to Fig. 3, a magnetic recording medium with a desired shape, for example, a magnetic disk 32 is cut out from the magnetic web 31.

In the known perpendicular magnetic recording medium with the double magnetic film layers, the first magnetic film layer is made of Fe-Co alloy and the second magnetic film layer is typically Co-Cr alloy, as described in the preamble. The Fe-Co magnetic film layer is formed with a magnetic easy axis due to any external magnetic field existing and/or tension applied to the web during the sputtering. The easy axis is in a web moving direction (MD) or a transverse direction (TD) of the web.

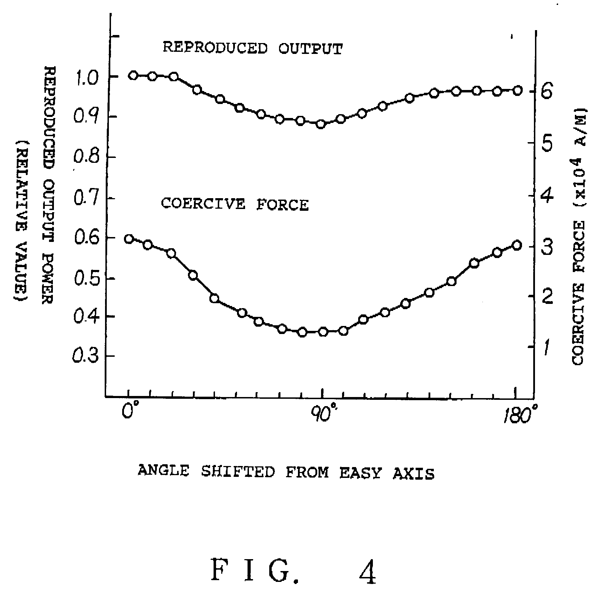

In the magnetic disk cut out from the magnetic web 31 having the known Fe-Co magnetic underlayer, a coercive force and an output power reproduced from the magnetic disk by use of a magnetic head were measured in relation to an angle shifted from the easy axis. The measued data are shown in Fig. 4. It is seen from Fig. 4 that the coercive force and the reproduced output power change by the angle from the easy axis. This means that the reproduced output power change during one rotation of the magnetic disk. In a type of a magnetic tape, a desired high reproduced output power is only achieved when the easy axis is coincident with a longitudinal direction of the tape. Accordingly, it is difficult to obtain the perpendicular magnetic recording medium which can stably provide a high reproducing output power.

According to the present invention, the first magnetic film layer or the magnetic underlayer (12 in Fig. 1) is made of a magnetic compound consisting essentially, by weight, of 0-25 wt% Cr, 5-70 wt%, preferably 35-60 wt% Ni, and substantially the balance of Co.

When Cr content is more than 25 wt% or when Ni content is more than 70 wt%, the resultant compound is non-magnetic or weak in the magnetism. Therefore, the compound is not proper for the magnetic underlayer. When Cr and Ni are less than 25 wt% and less than 5 wt%, respectively, the film layer of the resultant compound is magnetically oriented in the perpendicular direcion. This is not proper as the magnetic underlayer.

The thickness of the first magnetic film layer is selected 10-100 nm similar to that of the known Fe-Co magnetic underlayer.

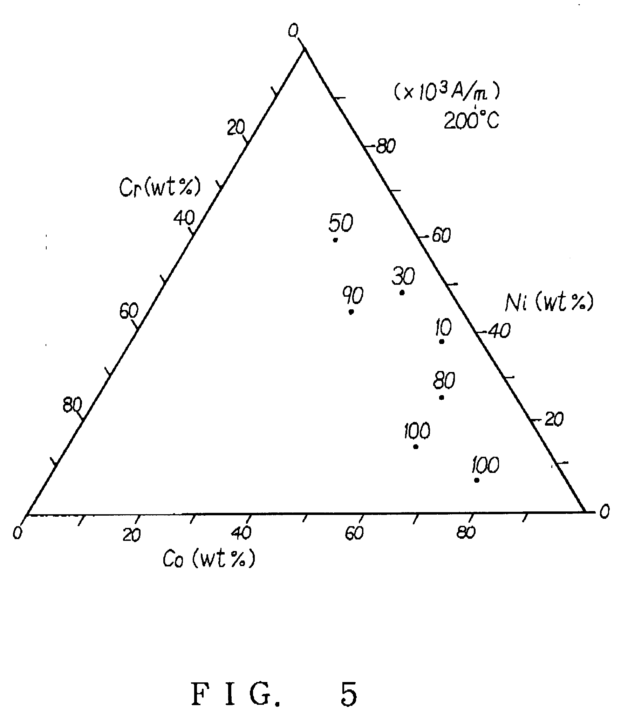

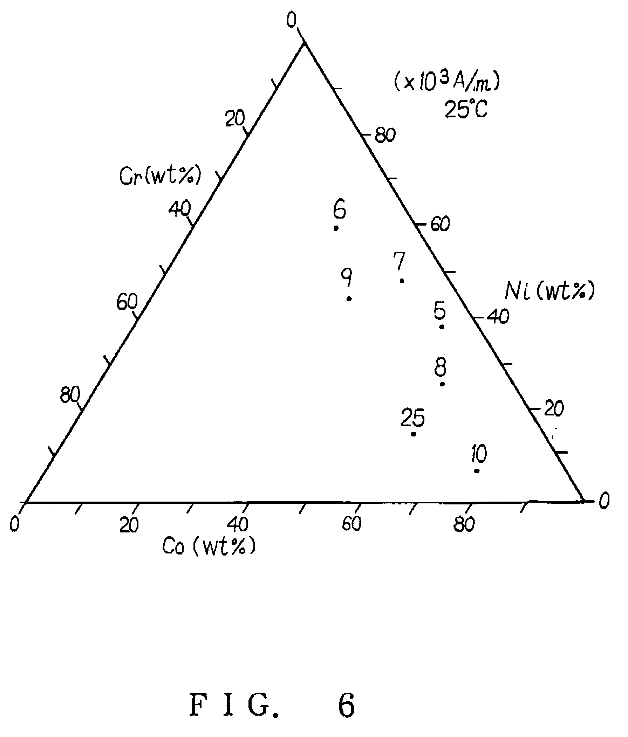

In order to measure the coercive force of various Co-Cr-Ni magnetic films, those films were formed on a non-magnetic substrate by the sputtering technique using different number of Cr and Ni Pellets disposed on Co target. In the sputtering, the pressure was 1 x 10 ⁻¹ Pa and the supply power was 500 W. The various Co-Cr-Ni compounds and the measured coercive forces of those compounds are shown in Figs. 5 and 6 for different substrate temperatures of 200 ^{o}C and 25 ^{o}c in the sputtering. In those figure, points in the triangle show compositions and numerals adjacent those points represent the coercive forces. It is seen from Fig. 5 that the coercive force is 10 x 10³ A/m at minimum and 100 x 10³ A/m at maximum for the substrate temperature of 200 ^{o}C. It is also seen from Fig. 6 that the coercive force is 5 x 10³ A/m at minimum and 25 x 10³ A/m at maximum for the substrate temperature of 25 ^{o}C. These values of the coercive force are sufficient for the magnetic underlayer in the perpendicular magnetic recording medium. Further, it was confirmed that the Co-Cr-Ni magnetic film had no anisotropy along the surface and had a hysteresis curve which was isotropic along the surface.

In the perpendicular magnetic recording medium according to the present invention, the second magnetic film layer (13 in Fig. 1) is made of a magnetic composition consisting of cobalt and at least one selected from a group of Cr, Ti Ta, Pt, and O and has a thickness of 0.01-0.8 µm similar to the known perpendicular magnetic recording medium.

The perpendicular magnetic recording medium according to the present invention is produced by the sputtering technique by use of the apparatus shown in Fig. 2 and in the manner described in connection with Fig. 2. Cr and Ni pellets are used on the Co target as the first target 25, and Ta pellet and Cr, Pt or other appropriate element pellet are used on the Co target or Co-Cr target as the other target 26.

The perpendicular magnetic recording medium according to the present invention may preferably have a protective film coated on the second magnetic film layer for enhancement of resistance against environment. The protective film should have the sheet resistance of 1 x 10¹³ ohms/square or more, preferably 1 x 10¹⁴ to 1 x 10¹⁷ ohms/square.

Further, the perpendicular magnetic recording medium according to the present invention is preferably provided with micro projections formed thereon with a density of 10⁴ projections/mm² or more and with an arithmetical mean value deviation of profile Ra of 10-30 Å. Thus, the perpendicular magnetic recording medium has an excellent resistance against wearing. Those micro projections can be realized by use of the non-magnetic carrier substrate (11 in Fig. 1) having those micro projections. Practically, micro projections on the substrate surface can be formed by known techniques, for example, by grinding the substrate surface by means of a grinder tape, or by making the substrate contain filler.

Now, examples of the present invention will be described together with several comparative examples, below.

### Example 1

As a non-manetic carrier substrate, a polyimide film was prepared with a thickness of 30 µm and a surface roughness of Ra=26 Å with micro projection density of 6 x 10⁶ projections/mm². A Co-Cr-Ni compound film layer, as the first magnetic layer, with a thickness of 500 A was formed on a surface of the polyimide film and then a Co-Cr alloy film layer, as the second magnetic film layer, with a thickness of 0.3 µm was formed on the Co-Cr-Ni compound film layer by the sputtering technique. Another Co-Cr film layer was also formed on an opposite surface of the plyimide film for film curl correction.

The Co-Cr-Ni compound consisted of, by weight, 14.4 wt% Cr, 8.8 wt% Ni and the balance of Co. The sputtering conditions were 0.1 Pa of pressure, 2.74 W/cm² of radio fequency power density and 25 ^{o}C of the substrate temperature.

The Co-Cr alloy consisted of, by weight, 17.5 wt% Cr and the balance of Co. The sputtering conditions were 0.1 Pa of pressure and 200 ^{o}C of substrate temperature.

Thereafter, as protective films, SiO₂ layers of 20 µm thickness were formed on both surfaces as protective films by the sputtering technique, and fluorine lubricant was then spin-coated thereon. Each of the SiO₂ layers had a sheet resistance of 1.0 x 10¹⁵ ohms/square.

### Example 2

Another magnetic medium was produced in the similar manner as in example 1 except that Co-Cr-Ni compound film layer consisted of, by weight, 12.5 wt% Cr, 26.5 wt% Ni and the balance of Co and was formed with a thickness of 40 nm.

### Example 3

Another magnetic medium was produced in the similar manner as in example 1 except that Co-Cr-Ni compound film layer consisted of, by weight, 8.5 wt% Cr, 48.5 wt% Ni and the balance of Co and was formed with a thickness of 50 nm at a substrate temperature of 200 ^{o}C.

### Example 4

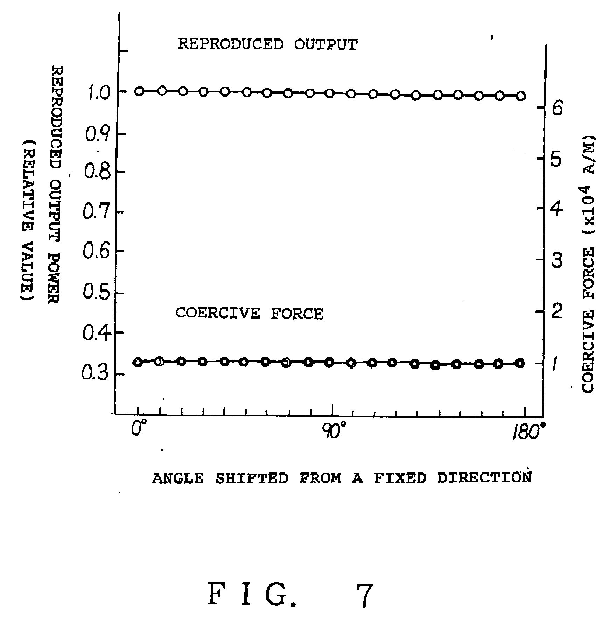

Another magnetic medium was produced in the similar manner as in example 1 except that Co-Cr-Ni compound film layer consisted of, by weight, 6.5 wt% Cr, 38.5 wt% Ni and the balance of Co and was formed with a thickness of 70 nm at a substrate temperature of 200 ^{o}C. The coercive force of and the output power reproduced from the magnetic medium were measured at various directions shifted from the longitudinal direction of the magnetic medium. The measured data are shown in Fig. 7. It is found out from Fig. 7 that the coercive force of and the output power reproduced from the magnetic medium are constant without relation to the direction shifted.

### Example 5

Another magnetic medium was produced in the similar manner as in example 1 except that Co-Cr-Ni compound film layer consisted of, by weight, 15.0 wt% Cr, 60.0 wt% Ni and the balance of Co.

### Example 6

Another magnetic medium was produced in the similar manner as in example 1 except that the first magnetic film layer was made of a magnetic compound which consisted of, by weight, 55.5 wt% Ni, 44.5 wt% Co, without content of Cr.

### Example 7

Another magnetic medium was produced in the similar manner as in example 1 except that the second magnetic film layer was made of Co-Cr-Ta alloy which consisted of, by weight, 80 wt% Co, 17.5 wt% Cr and 2.5 wt% Ta.

### Comparative Example 1

This comparative example was similar to Example 1 except that the first magnetic film layer was made of Co-Cr-Ni compound which consisted of, by weight, 30.0 wt% Co, 30.0 wt% Cr and 40 wt% Ni.

### Comparative Example 2

This comparative example was similar to Example 1 except that the first magnetic film layer was made of Co-Cr-Ni compound which consisted of, by weight, 10.0 wt% Co, 10.0 wt% Cr and 80 wt% Ni.

### Comparative Example 3

This comparative example was similar to Example 1 except that the first magnetic film layer was made of Co-Cr-Ni compound which consisted of, by weight, 82.1 wt% Co, 14.4 wt% Cr and 3.5 wt% Ni.

A magnetic disk of two inches diameter as a perpendicular magnetic recording medium was cut out from each of magnetic media of examples 1-7 and comparative examples 1-3 and formed a two-inch video flopy disk. The video flopy disk was subjected to the recording and reproducing tests by use of a commercially available video flopy disk driver, RV 301 made by Canon Inc. Recording was carried out for fifty tracks at a recording frequency of 9 MHz. Then, the C/N (Carrier to Noise ratio) and modulation of the reproduced signal were measured. The measured data are shown in Table 1. The values of C/N in Table 1 are relative values, providing that C/N value of a commercially available video flopy disk, VF-50 made by Canon Inc. is 0 dB.

**Table 1**

| Magnetic Medium | C/N(dB) | Modulation(%) |
|---|---|---|
| Example 1 | +8.2 | 2.0 |
| Example 2 | +5.4 | 1.5 |
| Example 3 | +7.1 | 2.6 |
| Example 4 | +6.8 | 1.7 |
| Example 5 | +7.0 | 2.2 |
| Example 6 | +5.2 | 5.4 |
| Example 7 | +4.8 | 1.8 |
| Comparative Example 1 | +2.0 | 5.0 |
| Comparative Example 2 | +1.5 | 5.5 |
| Comparative Example 3 | +3.0 | 3.0 |

It is understood from Table 1 that the perpendicular magnetic recording medium according to the present invention has a stable modulation and a high C/N.

## Claims

1. A perpendicular magnetic recording medium comprising a non-magnetic carrier substrate (11), a first magnetic film layer (12) formed on said carrier substrate (11), said first magnetic film layer (12) being a magnetic compound consisting essentially, by weight, of 0-25 wt% Cr, 5-70 wt% Ni and substantially the balance of Co, and a second magnetic film layer (13) of a cobalt alloy formed on said first magnetic film layer (12) for perpendicular magnetic recording.

2. A perpendicular magnetic recording medium as claimed in claim 1, wherein Ni content in said magnetic compound of said first magnetic film layer (12) is 35-60 wt%.

3. A perpendicular magnetic recording medium as claimed in claim 1 or 2, wherein said first magnetic film layer has a thickness of 100-1,000 Å.

4. A perpendicular magnetic recording medium as claimed in one of claims 1 to 3, wherein said second magnetic film layer (13) is made of a magnetic composition consisting essentially of cobalt and at least one selected from a group of Cr, Ti, Ta, Pt, and O.

5. A perpendicular magnetic recording medium as claimed in one of claims 1 to 4, which further comprises a protective film formed on said second magnetic film layer (13), said protective film consisting essentially of silicon oxide and having a sheet resistance of 1 x 10¹³ ohms/square or more.

6. A perpendicular magnetic recording medium as claimed in one of claims 1 to 5, which is provided with micro projections formed on its surface with a density of 10⁴ projections/mm² or more and with an arithmetical mean deviation of profile of 10-30 Å.
